# EUROPEAN PATENT SPECIFICATION

(11) **EP 2 245 497 B1**
(45) Date of publication and mention of the grant of the patent: **14.12.2016**
(21) Application number: 09709143.3
(22) Date of filing: 22.01.2009
(51) Int. Cl.: G02B 27/09, B23K 26/073, H01S 3/13, B23K 26/70, B23K 26/06

(54) **ILLUMINATING APPARATUS AND METHOD FOR CONTROLLING ENERGY OF A LASER SOURCE**
BELEUCHTUNGSGERÄT UND VERFAHREN ZUR STEUERUNG DER ENERGIE EINER LASERQUELLE
APPAREIL D'ÉCLAIRAGE ET PROCÉDÉ DE RÉGULATION D'ÉNERGIE D'UNE SOURCE LASER

(30) Priority: 07.02.2008 US 27442
(43) Date of publication of application: 03.11.2010
(73) Proprietor: Carl Zeiss Laser Optics GmbH, 73447 Oberkochen (DE); Cymer, LLC, San Diego, CA 92127 (US)
(72) Inventor: WEIGL, Bernhard, 89555 Steinheim (DE); SANDSTROM, Richard, Encinitas CA 92024 (US)
(74) Representative: Grünecker Patent- und Rechtsanwälte PartG mbB
(86) International application number: PCT/EP2009/000365
(87) International publication number: WO 2009/097967

(56) References cited:
- WO-A2-2005/054949
- JP-A- 11 283 933
- JP-A- 2003 053 578
- US-A- 5 721 416
- US-A1- 2005 035 103
- US-A1- 2005 170 569

## Description

### BACKGROUND OF THE INVENTION

The present invention relates to an illuminating apparatus for illuminating a sample on a work stage with a narrow illuminating line of controlled energy according to the preamble of claim 1.

Many technical applications in electronics and display technology require a thin polycrystalline silicon (Si) layer on glass. Such panels are typically used for liquid crystal display (LCD), organic light emitting diode (OLED) and solar cell technology. The standard process to produce such panels is to first deposit amorphous Si layers on glass by chemical vapour deposition (CVD) or sputter processes. Subsequently a polycrystalline film is formed by laser annealing such as excimer laser crystallization (ELC) or sequential lateral solidification (SLS) techniques. An overview of these different common techniques is given e.g. in US 7,061,959.

A quite novel technique for conversion of amorphous silicon into polycrystalline silicon is the so called thin beam directional x-tallization (TDX) process. This process uses a pulsed narrow narrowly focused laser line with a width (so called short axis) dimension of about 10 µm and a longitudinal (so called long axis) dimension of about 500 mm which is scanned in the short axis direction in order to melt the thin Si layer having a thickness of 30 to 100 nm.

When applying the ELC, SLS or TDX processes a thin silicon layer on glass is melted by an illumination line being emitted by a high energy excimer laser, preferably a XeCl excimer laser, and being shaped by a beam shaping optics. According to the present application beam shaping optics means a module between the laser and the imaging optics performing at least one of the following functions:
- changing the shape and / or divergence in one or two directions perpendicular to the direction of beam propagation.
- homogenizing the intensity at a field and /or pupil plane in one and /or two directions
- changing the spatial and / or temporal coherence.

After having shaped said beam by means of said beam shaping optics said beam has a rectangular cross section which upon further propagation scales in size in long and/or short axis direction.

Such beam shaping optics may comprise one or more beam expanders for expanding the laser beam in the long axis direction, one or more homogenizers for homogenizing the beam in the long and/or short axis direction and preferably one or more devices for limiting the dimension of the beam in short axis direction. WO 2006/066706 A2 discloses an example for an apparatus for generating a narrow illuminating line being capable for applying the TDX process.

The energy density of the laser line on the silicon layer has to be homogenous in the long axis direction and lie within a certain process window. The theoretical process window is reduced by effects like long axis uniformity fluctuations, beam position and pointing fluctuations, variations of the Si film thickness and/or a variation of the overall energy reaching the panel. The latter is mainly induced by variations of beam parameters of the laser that influence the transmission of the optical system. For these reasons the relevant process parameters have to be measured and stabilized.

Usually, the laser energy is stabilized by a feed back loop that measures the energy close to the exit window of the laser. This is the most frequently used laser energy stabilization technique since nearly each commercially available laser is equipped with such a feedback loop. A laser annealing system comprising such a laser energy stabilization system works quite well, however, it does not prevent variations of energy density along the laser line on the silicon layer leading to poor crystal quality when using the TDX process.

US 7,061,959 B2 discloses an energy monitor feedback to the laser in a stabilization metrology module (SMM). The SMM is part of the beam shaping optics as defined above. A drawback of such an arrangement is a non negligible variation of energy density of the laser line on the silicon layer.

Furthermore, US 7,061,959 B2 discloses an energy monitor feedback at the work stage. Energy monitoring at the work stage itself has the advantage of controlling energy instantaneously at the location where the light is absorbed and the energy from the laser is converted into heat melting the amorphous semiconductor film. Nevertheless, at that location the light energy may only be measured at time periods when no panel is located there. Therefore, the energy monitoring may only be performed by use of a removable service tool for a one-time adjustment purposes or by an energy meter which is arranged between panels when scanning the laser line in operation mode.

US 5,721,416 A1 discloses the arrangement of a transparent mirror in the beam path between a reducing optics and a final window for branching off a partial beam (a few percent) which then are imaged by a microscope lens on a solid body image converter to monitor the beam profile. The solid body image converter is provided for monitoring purposes, only. A feedback of the monitored signal to the laser is not intended.

### SUMMARY OF THE INVENTION

Therefore, it is an object of the present invention to provide an illuminating apparatus and a method for controlling energy of a laser source with improved reduction of variations of energy density of the laser line on the sample being illuminated.

This object may be achieved by an illuminating apparatus for illuminating a sample on a work stage with a narrow illuminating line of controlled energy according to claim 1.

Advantageous variations and embodiments are subject matters of the sub claims.

Since some beam parameters like pointing, divergence, and polarization are changing over time, the transmission through the beam shaping optics is subjected to change. This influences one of the main process parameters, namely the energy density on the panel.

An illuminating apparatus is provided for illuminating a sample on a work stage with a narrow illuminating line of controlled energy, whereby said illuminating line is generated from emitted from a laser said illuminating line has an dimension in a first direction and an dimension in a second direction being perpendicular to said first direction whereby said first direction dimension exceeds said second direction dimension by a multiple. Furthermore said illumination apparatus comprises a beam shaping optical system for shaping said laser beam into a line shape, an energy measuring device for measuring energy of said laser beam and an energy control system for generating a control signal upon said measured laser beam energy and for controlling the energy output of said laser source based on said control signal, whereby said energy measuring device is arranged in said beam path after said beam shaping optical system and before said work stage. Said energy measuring device, in the following for simplicity called process energy monitor (PEM) measures the energy incident on the panel and feeds a signal back to the control loop of the laser.

Said illumination apparatus may not only be limited to laser annealing and/or laser crystallization purposes, such as related to ELC, SLS or TDX processes, but also to any laser light exposures requiring a thin illuminating line having a high aspect ratio of e.g. several hundreds or even thousands.

It has been found that energy measurement relying only on a fraction of the beam at an outer edge may only deliver a useful control signal, if the energy at the outer edge is a good measure of the total beam energy which in general will not be the case. Therefore, according to a preferred embodiment said control signal is generated such that it is indicative of an averaged beam energy along the dimension of said line shaped beam in said first direction.

It is quite difficult to place an energy meter directly in the beam path of an illuminating apparatus according to the present invention without disturbing beam performance and/or output energy. One solution may be that said energy measuring device comprises a beam splitter for coupling out a fraction of said line shaped beam and a detector for detecting said fraction.

In general, said detector may be an array of any kind being capable of detecting laser light. In particular, said detector may be a two dimensional array having sensors in two dimensions or a one dimensional array having light detecting elements only in one direction, i.e. being oriented preferably in long axis direction. In a preferred embodiment according to the present invention said detector comprises a plurality of photodiodes being arranged side by side in said first direction for collecting said fraction. Despite these photodiodes may be arranged such that a few rows of photodiodes form a two dimensional sensor array the most preferred embodiment consists in a one dimensional array of photodiodes being placed side by side.

In order to reduce the number of photodiodes as far as possible the detector of the illuminating apparatus according to the invention further comprises a plurality of spherical lenses for focusing said fraction onto said plurality of photodiodes. It may be worth mentioning that also cylindrical lenses or double cylindrical lenses with cylindrical surfaces transversely crossing each other or any other focusing lenses may be used. Nevertheless, for manufacturability reasons spherical lenses will be preferred.

The illuminating may further comprise a reducing optics in said beam path after said beam shaping optical system for reducing said line shaped beam in said second direction. Said energy measuring device may be located in the beam path direction before or after said reducing optics. Alternatively, said energy measuring device may also be located in said reducing optics itself. When said beam is narrowed significantly by said reducing optics the collection (and the subsequent detection) of the most relevant part of the beam may be easier.

The illuminating apparatus comprises an imaging optics for imaging said line shaped beam onto said sample. Said imaging optics may comprise said reducing optics. Beam imaging may improve illuminating line properties on the sample, namely the panel.

The beam shaping optical system comprises a homogenizer for homogenizing said laser beam at least along its dimension in said first direction. Said energy measuring device is thus located in the beam path after said homogenizer. Typical homogenizers for use in said beam shaping optical system are disclosed in US 5,721,416 A1 or WO 2006/066706 A2.

The beam shaping optical system comprises a field defining optical device for defining the dimension of said laser beam at least in said second direction. US 5,721,416 A1, US 60/731,539, and US 60/753,829 disclose arrangements for defining or limiting the dimension of said laser beam at least in said second direction.

A method is provided for controlling energy of a laser source when illuminating a sample on a work stage with a narrow illuminating line, whereby said illuminating line is generated from a laser beam propagating along a beam path and being emitted from said laser source and having an dimension in a first direction exceeding an dimension in a second direction being perpendicular to said first direction by a multiple, which further comprises the steps of shaping said laser beam into a line shape, measuring the energy of said laser beam in said beam path after said beam shaping optical system and before said work stage, generating a control signal upon said measured laser beam energy, and controlling energy output of said laser source based on said control signal.

Said method is characterized in that said control signal is indicative of an averaged beam energy along the dimension of said line shaped beam in said first direction. Alternatively relying only on a fraction at an outer edge of the beam is disadvantageous since the energy at the outer edge in general might not reflect the energy of the total beam.

The method comprises the step of splitting said laser beam in said beam path after said beam shaping optical system and before said work stage and coupling out a fraction and detecting said fraction.

Said method further preferably comprises the step of averaging a beam energy of said fraction along the dimension of said fraction in said first direction. It is not necessary and in some cases hardly possible also to average the beam energy in said second direction. Averaging the beam energy along the dimension in said first direction contains enough information for generating a control signal. The averaging may be done by integrating the beam energy along the long axis direction, only. A weighing of the signal with respect to the length being integrated is not necessary.

Said method is characterized in the step of dividing said fraction into a plurality of sub beams and focusing said plurality of sub beams onto a detector array comprising e.g. a plurality of photodiodes. Alternatively pyroelectric and thermoelectric sensors can be used. This implies a reduction in the number of necessary detector array elements such as photodiodes as well as an efficient way to collect the beam dimension in total. Focusing of a plurality of beams also has the advantage that an adjustment of the detector with respect to the beam to be detected may be realized much easier than without having any focusing means.

According to a further variant said method comprises the step of reducing said line shaped beam in said second direction. Said energy may be measured in said beam path direction before, after or during reducing said line shaped beam in said second direction.

Optionally, said method may be characterized in further imaging said line shaped beam onto said sample or panel. Imaging the beam has the advantage of being able to after the illuminating line properties at the intermediate field plane and thus on the sample or panel.

The method may further comprise the step of homogenizing said laser beam at least along its dimension in said first direction. The beam energy may be measured in the beam path after homogenizing said laser beam.

According to still another aspect an illuminating apparatus for illuminating a sample on a work stage is provided with a narrow illuminating line of controlled energy, said illuminating line being generated from a laser beam propagating along a beam path and being emitted from a laser source and having an dimension in a first direction exceeding an dimension in a second direction being perpendicular to said first direction by a multiple. Said apparatus further comprises a beam shaping optical system for shaping said laser beam into a line shape, an energy measuring device for measuring energy of said laser beam and an energy control system for generating a control signal, which is indicative of an averaged beam energy along the dimension of said line shaped beam in said first direction, of said measured laser beam energy and for controlling energy output of said laser source as a result of said control signal.

Said energy measuring device comprises a beam splitter for coupling out a fraction of said line shaped beam and a detector for detecting said fraction.

Said detector optionally comprises a plurality of photodiodes being arranged side by side in said first direction for collecting said fraction as is explained above.

Furthermore, for simplicity reasons, said detector may comprise a plurality of spherical lenses for focusing said fraction onto said plurality of photodiodes.

Said at least two of said photodiodes may be electrically coupled in parallel. Coupling of photodiodes in parallel results in an addition of the photocurrents being generated when illuminating said photodiodes. A current signal consisting of an addition of photocurrents corresponds to an (not normalized) averaging of beam energy impinging on said photodiodes.

In general voltage signals are used in order to control laser beam output of the laser. The voltage control signal may be generated by means of measuring the voltage drop along a shunt resistor being electrically coupled in series to (at least one of) said photodiodes.

In order to keep the loss for measuring the intensity small, one may use reverse biased photodiodes which will also facilitate time resolved detection of the short Excimer laser pulses if desired.

Examples for detection of optical signals are given in Dereniak and Crowe: Optical Radiation Detectors (Wiley) which is herewith incorporated by reference.

In principle the laser output may be controlled by an electronic feed back loop. The input signal may be generated by several photodiodes. The charge that is generated by the laser pulse in each photo diode may be added electronically. In order to keep dark currents low it is possible that the photo diodes are not biased.

Furthermore, a method for controlling energy of a laser source when illuminating a sample on a work stage with a narrow illuminating line is provided, whereby said illuminating line being generated from a laser beam propagating along a beam path and being emitted from said laser source and having an dimension in a first direction exceeding an dimension in a second direction being perpendicular to said first direction by a multiple, said method comprises the steps of shaping said laser beam, measuring energy of said shaped laser beam, generating a control signal upon said measured laser beam energy, whereby said control signal is indicative of an averaged beam energy along the dimension of said line shaped beam in said first direction and controls the energy output of said laser source based on said control signal.

A fraction of said line shaped beam is coupled out and subsequently detected. Further said fraction is divided into a plurality of beam lets. Each of said beam lets is afterwards detected separately.

Following the method described in the foregoing paragraphs preferably each of said plurality of beamlets is focused separately for detection.

In a preferred embodiment said method comprises the step of converting detection signals being generated upon detecting each of said beamlets separately into a sum signal. Such a sum signal represents an averaging of said beam being detected. Said sum signal may subsequently be converted into said control signal (for example in the way as described above).

### BRIEF DESCRIPTION OF THE DRAWINGS

The invention will be described hereinafter with reference to the drawings, whereby
- Figure 1: shows schematically a TDX apparatus according to the present invention,
- Figure 2: shows schematically a section of said TDX apparatus according to Figure 1,
- Figure 3: shows an energy measuring device incorporated into said TDX apparatus according to Figures 1 and 2 according to the invention,
- Figure 4: shows energy fluctuations at a panel/sample when controlling laser output energy with energy monitor being located according to the invention compared to controlling laser output energy with energy meter being located according to prior art.

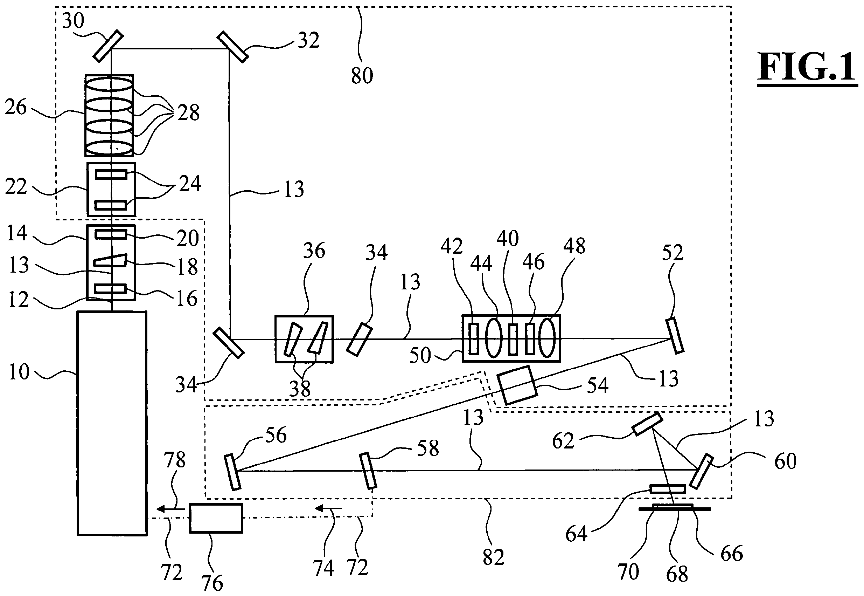

Figure 1 shows a schematic drawing of an illuminating apparatus, in particular for applying the above mentioned TDX process, according to the present invention. This TDX tool comprises as a light source an excimer laser 10, such as a XeCl- excimer laser emitting a pulsed laser beam 12. Typical pulse widths are 10 - 30 ns at a typical repetition rate of 100 Hz - 10 kHz. The Energy of such a laser pulse is typically in the range of 100 mJ - 1000 mJ.

This laser beam 12 with typical rectangular cross section of 10 x 30 mm is directed along a beam path 13 and converted into a narrow illuminating line 70 via an optical system described in detail in the following. The illuminating line 70 on said sample/panel 66 has an dimension in a long axis direction transverse to the scanning direction of at least 200 mm and an dimension in a short axis direction, i.e. in scan direction, of 3 to 7 µm. This illuminating line 70 with high aspect ratio illuminates a sample such as a panel 66 being positioned on a work stage 68. The work stage 68 is moved with a stage scanning speed of around 10 mm/s resulting in a typical scan increment of e.g. 2 µm/pulse.

After having left the laser 10 said light beam 12 is directed to a so called beam delivery unit (BDU) 14. This BDU 14 comprises an entrance window 16, a pulse stretcher 18 for lengthening the pulse width by a factor of 2- / 6. The lengthened laser pulse 12 exits the BDU 14 via an exit window 20.

In the following the cross section of said laser beam 12 is converted from a rectangular one into a line shape. For this purpose the laser beam 12 is first directed to a beam preconditioning unit (BPU) 22. The BPU 22 comprises a plurality of optical elements 24. This arrangement of optical elements 24 serves for flattening the intensity profile of said laser beam 12.

The beam expanding unit (BEU) 26 being arranged in the beam path 13 after said BPU 22 serves for expanding the laser beam 12 in a lengthwise direction. Hereinafter the lengthwise direction is always indicated with the reference numeral x, the width direction of the laser beam is labelled with the reference numeral y. In the present case the dimension of the laser beam 12 is carried out by means of four lenses 28 being arranged one after the other on said beam path 13. Instead of the use of such lenses also bent mirrors are known to be capable for use according to the prior art.

For shortening the total dimension of said illuminating apparatus according to the invention a plurality of plane mirrors may be used. Exemplarily, three mirrors 30, 32, 34 are folding the beam path 13 before said laser beam 12 enters a beam stability metrology unit (BSMU) 36. The beam stability metrology unit 36 comprises an arrangement of optical elements 38 being movable in different directions in order to adjust and/or correct e.g. the pointing and/or position of the laser beam 12. Respective laser beam monitoring devices (not shown here) are located at the exit of said BSMU 36. Details are e.g. disclosed in US 7,061,959 B2.

Following the BSMU 36 in the beam path 13 a homogenizing device 40 for homogenizing said expanded line shaped laser beam 12 is positioned. This homogenizer 40 in the example according to Figure 1 comprises a cylindrical lens array 42 followed by a lens 44, a further cylindrical lens array 46, a rod 48 and a condenser 50. US 5,721,416 A1 or WO 2006/066706 A2 disclose a plurality of different homogenizers being capable of being inserted in addition or alternatively into the beam path 13 where said homogenizer 40 is located.

Subsequently, the laser beam 12 is directed to folding mirror 52 and in the following to field defining unit (FDU) 54. FDU 54 defines dimension of the laser beam 12 in a field plane and in particular in the panel plane 66 in short axis direction y. A FDU 54 may comprise an arrangement being described in US 5,721,416 A1 or alternatively one of the arrangements as being disclosed in US 60/731,539 or US 60/753,829.

Since the optical elements following the BDU 14 in the optical beam path 13 until the exit of the FDU 54 shape the laser beam 12 from a raw laser beam with rectangular cross section into a line beam with a target homogeneous intensity distribution along the long axis direction said respective arrangement of optical elements in the following is called beam shaping unit (BSU). The dashed line identified with the reference numeral 80 in Figure 1 encircles in said afore mentioned optical elements at the BSU.

When leaving said BSU 80 the rectangular cross section shaped laser beam 12 is directed to a combined imaging, reducing and folding optics 82 comprising a plurality of plan or cylindrical mirrors 56, 60, 62, respectively. Instead of an arrangement of mirrors 56, 60, 62 also a plurality of cylindrical lenses or a combination of lenses and mirrors may be used. Typical setups are e.g. disclosed in WO 2006/066706 A2 or in US 5,721,416 A1. The laser beam 12 leaves said imaging, reducing and folding optics 82, which for simplicity reasons in the following is called beam projection unit (BPU) 82, through an exit window 64. The laser beam 12 having an expanded long axis dimension and a reduced short axis dimension as compared to its dimensions when leaving the BSU 80 is focused as said narrow illuminating line 70 on the panel 66, being e.g. covered with an amorphous silicon layer, on said work stage 68.

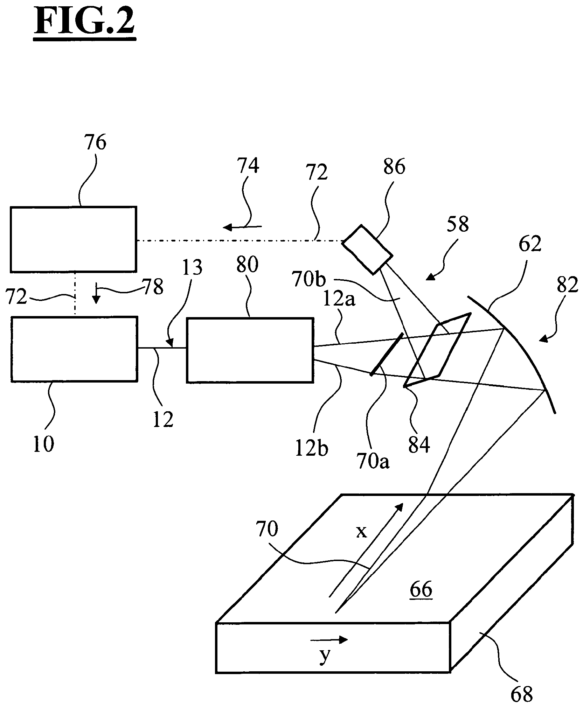

Summarizing the main features for generating said illuminating line the optical system according to Figure 1, Figure 2 shows the light train as a block diagram. In particular, said laser source and said BSU are drawn as rectangular blocks indicated with the reference numerals 10 and 80, respectively, while said BPU 82 is represented solely by the afore mentioned cylindrical mirror 62. For illustrative purposes the laser beam 12 entering said BSU 80 is indicated as a single straight line having a point cross section while the laser beam with its cross section further expanding in long axis direction when leaving said BSU 80 is indicated by two diverging lines 12a, 12b and a straight line 70a connecting these lines 12a, 12b, respectively. The illuminating line 70 focused on said panel 66 being positioned on said work stage 68 is indicated by a straight line, said long and short axis directions are indicated with reference numerals x and y, respectively.

The inventors recognized that since energy density on the panel is the most relevant process parameter, the pulse energy has to be measured close to the panel 66 or at a location with corresponding energy density. This signal has to be fed back to the stabilization circuit of the laser 10.

The energy density at the panel 66 is mostly given by the laser energy and the optical transmission through the optical system. Changes in system transmission are mostly generated in the beam shaping module 80 when parameters like pointing, beam divergence or polarization are changing. The influence on system transmission from the projection optics 82 is relatively small. Therefore suitable positions for energy measurements are located along the beam path 13 in the projection module 82 or in the reflected beam from the panel.

Therefore, while according to the prior art disclosed in US 7,061,959 B2 an energy meter is located in the beam path 13 between BSMU 94 and homogenizer 40 which is indicated by the optical element 94 in dashed lines in Figure 1, according to the invention an energy meter is located in the beam path 13 between the exit of the BSU 80 and the panel 66. There are some advantages in positioning the sensor in the projection optics over a direct measurement in the panel level. There is more space available and there is a smaller influence on image quality of the laser line. At some distance from the panel the line has not yet reached its full length and so it is easier to collect the light with a beam splitter.

Thus, in the specific embodiment shown in Figure 1 said energy meter, in the following called process energy monitor (PEM) 58, is located between the mirrors 56 and 60. Said PEM 58 comprises a beam splitter 84, which might be a semitransparent window or a transparent window, and a detector 86 as is shown in Figure 2. The main portion of the line shaped laser beam 12 hitting the front surface of the beam splitter 84 passes the beam splitter 84 and is further imaged and reduced forming the final illuminating line 70 on the panel 66. A fraction 70b of e.g. preferably 0.05 to 0.5 % is reflected on e.g. the rear surface of the beam splitter 84 and directed to the detector 86.

The detector 86 detects said fraction 70b (or at least a part thereof) and converts it into a measured signal 74, e.g. an electrical current or an electrical voltage. The measured signal 74 is fed back via a feed back loop 72 to a control device 76, such as a master controller which generates a control signal 78 for controlling the output energy of said laser beam source 10.

In order to detect a spatially resolved energy density one would need a large two-dimensional sensor. The feedback signal for the laser starts as an analog value that determines the laser energy. To get this signal a numerical (adding up recorded values), electrical (adding currents of photo sensitive elements) or optical integration (adding the light with lens elements) has to be done. For the current problem with a narrow illuminating line the inventors decided to choose a solution using an optical and an electrical averaging method.

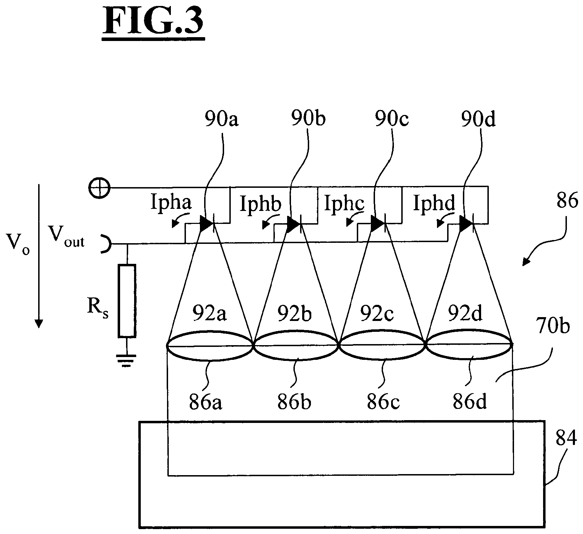

Figure 3 shows said energy measuring device 86 being part of said TDX apparatus according to Figures 1 and 2. Approximately 0.2% of the beam energy is coupled out with said aforementioned beam splitter 84 that is realized as a two sided antireflective (AR) coated glass plate. Most of the beam fraction 70b is focused onto four photodiodes 90a, 90b, 90c, 90d by means of four large spherical lenses 88a, 88b, 88c, 88d dividing the fraction 70b into four individual beamlets 92a, 92b, 92c, 92d. The four photodiodes 90a, 90b, 90c, 90d are electrically connected in parallel and in combination electrically connected in series to a shunt resistor Rₛ. The electrical circuit comprising said photodiodes 90a, 90b, 90c, 90d and said shunt resistor Rₛ is reverse biased by the reverse bias voltage Vo.

Upon illuminating the photodiodes 90a, 90b, 90c, 90d photocurrents Iₚₕₐ, I_{phb}, I_{phc}, I_{phd} are generated. The four individual photocurrents Iₚₕₐ, I_{phb}, I_{phc}, I_{phd} (which are in general not identical) are added on said single shared shunt resistor Rₛ. The control signal 78 needed for the feed back loop 72 is available at the output of this circuit as an output voltage Vₒᵤₜ.

The four photodiodes 90a, 90b, 90c, 90d are electrically connected in parallel. The electrical circuit comprising said photodiodes 90a, 90b, 90c, 90d and an electronic circuit that adds up the individual charges, analyzes the sum signal and generates an output Voltage Vₒᵤₜ. Upon illuminating the photodiodes 90a, 90b, 90c, 90d charges Qₚₕₐ, Q_{phb}, Q_{phc}, Q_{phd} are generated. The four individual charges Qₚₕₐ, Q_{phb}, Q_{phc}, Q_{phd} (which are in general not identical) are added in said electronic circuit. The control signal 78 needed for the feed back loop 72 is available at the output of this circuit as an output voltage Vₒᵤₜ.

It may be worth mentioning that instead of the above sensing device comprising four photodiodes 90a, 90b, 90c, 90d and an electronic circuit for read out any number of sensor types and their supporting circuitry could be used (photodiode, photomultiplier, pyroelectric, photo resistive, photon drag, etc. may be used.

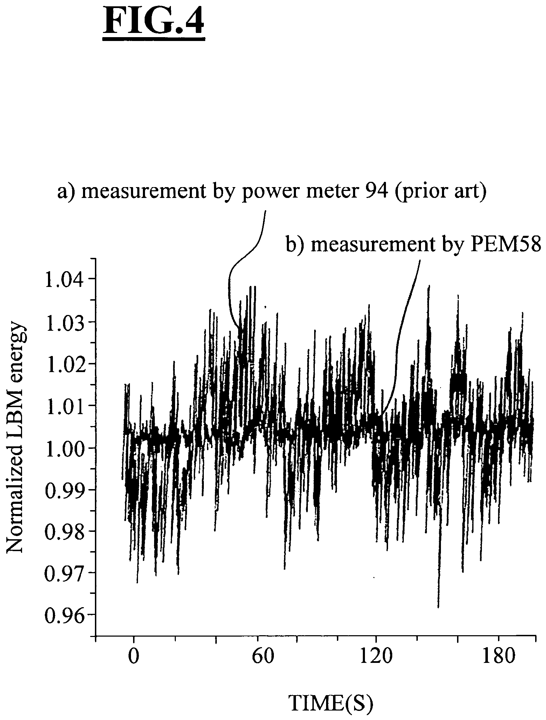

When upgrading the TDX apparatus with the PEM device 58 a significant improvement of stability of energy density on the panel 66 and an enlarged process window is observed. Figure 4 shows the normalized line beam energy in the panel plane 66 recorded with an energy meter (such as e.g. disclosed in US 7,061,959 B2). The thin lined curve shows the fluctuations without PEM 58 but an energy meter 94 being located in the beam path 13 between BSMU 36 and homogenizer 40 that are +/- 3.5%. Using the PEM 58 in the beam path 13 between mirrors 56 and 60 for feedback control of the laser source 10 the fluctuations (bold curve) were reduced to +/- 0.7 %. As a result the useful process window could be enlarged by 5.5 %.

### REFERENCE NUMBERS

- 10: excimer laser
- 12: laser beam
- 12a: line
- 12b: line
- 13: beam path
- 14: beam delivery unit (BDU)
- 16: entrance window
- 18: pulse stretcher
- 20: exit window
- 22: beam preconditioning unit (BPU)
- 24: arrangement of optical elements
- 26: beam expanding unit (BEU)
- 28: lens arrangement
- 30: mirror
- 32: mirror
- 34: mirror
- 36: beam stability metrology unit (BSMU)
- 38: arrangement of optical elements
- 40: homogenizer
- 42: cylindrical lens array
- 44: lens
- 46: cylindrical lens array
- 48: rod
- 50: condenser
- 52: mirror
- 54: field defining unit (FDU)
- 56: mirror
- 58: process energy monitor (PEM)
- 60: mirror
- 62: mirror
- 64: exit window
- 66: panel
- 68: work stage
- 70: illuminating line
- 70a: line shaped beam
- 70b: fraction of line shaped beam
- 72: feedback loop
- 74: measured signal
- 76: master controller
- 78: control signal
- 80: illumination system/beam shaping unit (BSU)
- 82: imaging optics/reducing optics/beam projection unit (BPU)
- 84: beam splitter/transparent mirror
- 86: detector
- 88a: lens
- 88b: lens
- 88c: lens
- 88d: lens
- 90a: photodiode
- 90b: photodiode
- 90c: photodiode
- 90d: photodiode
- 92a: focused beam let
- 92b: focused beam let
- 92c: focused beam let
- 92d: focused beam let
- 94: energy meter (prior art)

- x: first direction
- y: second direction
- V₀: bias voltage
- Vₒᵤₜ: output voltage
- Rₛ: shunt resistor
- Iₚₕₐ: photocurrent
- I_{phb}: photocurrent
- I_{phc}: photocurrent
- I_{phd}: photocurrent

## Claims

1. Illuminating apparatus for illuminating a sample (66) on a work stage (68) with a narrow illuminating line (870) of controlled energy, said illuminating apparatus comprising a laser source (10), said illuminating line (70) being generated from a laser beam (12) propagating along a beam path (13) and being emitted from said laser source (10) and having a dimension in a first direction (x) exceeding a dimension in a second direction (y) being perpendicular to said first direction (x) by a multiple, comprising:
a beam shaping optical system (80) for shaping said laser beam (12) into a line shape (70a),
an energy measuring device (58) for measuring energy of said laser beam (12),
an energy control system (76) for generating a control signal (78) upon said measured laser beam energy and for controlling energy output of said laser source (10) upon said control signal (78),
**characterized in that**
said energy measuring device (58) is arranged in said beam path (13) after said beam shaping optical system (80) and before said work stage (68);
said energy measuring device (58) comprises a beam splitter (84) for coupling out a fraction (70b) of said line shaped beam (70a) and a detector (86) comprising a plurality of lenses (88a, 88b, 88c, 88d) for focusing said fraction (70b) of said line shaped beam (70a) onto a plurality of sensors (90a, 90b, 90c, 90d);
said plurality of sensors (90a, 90b, 90c, 90d) being adapted to output a plurality of signals (Iₚₕₐ, I_{phb}, i_{phc}, I_{phd}), the energy control system being adapted to integrate said plurality of signals (Iₚₕₐ, I_{phb}, I_{phc}, I_{phd}) to generate said control signal (78);
said control signal (78) being indicative of an averaged beam energy along the dimension of said line shaped beam (70a) in said first direction (x).

2. Illuminating apparatus according to claim 1, **characterized in that** said sensors comprise a plurality of photodiodes (90a, 90b, 90c, 90d) that are arranged side by side in said first direction (x) for collecting said fraction (70b).

3. Illuminating apparatus according to claim 2, **characterized in that** said lenses (88a, 88b, 88c, 88d) are spherical lenses.

4. Illuminating apparatus according to one of claims 2 or 3, **characterized in that** at least one of said photodiodes (90a, 90b, 90c, 90d) is electrically reverse-biased (V₀).

5. Illuminating apparatus according to one of the preceding claims, **characterized in that** it further comprises a reducing optics (82) for reducing said line shaped beam (70a) in said second direction (y).

6. Illuminating apparatus according to one of the preceding claims, **characterized in that** it further comprises an imaging optics (82) for imaging said line shaped beam (70a) onto said sample (66).

7. Illuminating apparatus according to one of the preceding claims, **characterized in that** said beam shaping optical system (80) comprises a homogenizer (40) for homogenizing said laser beam (12) at least along its dimension in said first direction (x).

8. Illuminating apparatus according to one of the preceding claims, **characterized in that** said beam shaping optical system (80) comprises a field defining optical device (54) for defining the dimension of said laser beam (12) at least in said second direction (y).

## Patentansprüche

1. Beleuchtungsvorrichtung zum Beleuchten einer Probe (66) auf einem Arbeitstisch (68) mit einer schmalen Beleuchtungslinie (870) kontrollierter Energie, wobei die Beleuchtungsvorrichtung eine Laser-Quelle (10) umfasst, die Beleuchtungslinie (70) aus einem Laserstrahl (12) erzeugt wird, der sich auf einem Strahlenweg (13) ausbreitet und von der Laser-Quelle (10) emittiert wird und eine Abmessung in einer ersten Richtung (x) hat, die eine Abmessung in einer zweiten Richtung (y), die senkrecht zu der ersten Richtung (x) ist, um ein Vielfaches überschreitet, wobei die Vorrichtung umfasst:
eine Strahlformungs-Optik (80), mit der der Laserstrahl (12) in eine Linienform (70a) gebracht wird,
eine Energie-Messvorrichtung (58) zum Messen von Energie des Laserstrahls (12),
ein Energie-Steuerungssystem (76), mit dem auf die gemessene Energie des Laser-strahls hin ein Steuerungssignal (78) erzeugt wird und auf das Steuerungssignal (78) hin Ausgangsenergie der Laser-Quelle (10) gesteuert wird,
**dadurch gekennzeichnet, dass**
die Energie-Messvorrichtung (58) auf dem Strahlenweg (13) nach der Strahlformungs-Optik (80) und vor dem Arbeitstisch (68) angeordnet ist;
die Energie-Messvorrichtung (58) einen Strahlteiler (84), mit dem ein Teil (70b) des linienförmigen Strahls (70a) aus gekoppelt wird, sowie einen Detektor (86) umfasst, der eine Vielzahl von Linsen (88a, 88b, 88c, 88d) umfasst, mit denen der Teil (70b) des linienförmigen Strahls (70a) auf eine Vielzahl von Sensoren (90a, 90b, 90c, 90d) fokussiert wird;
wobei die Vielzahl von Sensoren (90a, 90b, 90c, 90d) so eingerichtet sind, dass sie eine Vielzahl von Signalen (Iₚₕₐ, I_{phb}, I_{phc}, I_{phd}) ausgeben, und das Energie-Steuerungssystem so eingerichtet ist, dass es die Vielzahl von Signalen (Iₚₕₐ, I_{phb}, I_{phc}, I_{phd}) integriert, um das Steuerungssignal (78) zu erzeugen;
das Steuerungssignal (78) eine durchschnittliche Strahlenenergie entlang der Abmessung des linienförmigen Strahls (70a) in der ersten Richtung (x) anzeigt.

2. Beleuchtungsvorrichtung nach Anspruch 1, **dadurch gekennzeichnet, dass** die Sensoren eine Vielzahl von Fotodioden (90a, 90b, 90c, 90d) umfassen, die zum Erfassen des Teils (70b) in der ersten Richtung (x) nebeneinander angeordnet sind.

3. Beleuchtungsvorrichtung nach Anspruch 2, **dadurch gekennzeichnet, dass** die Linsen (88a, 88b, 88c, 88d) sphärische Linsen sind.

4. Beleuchtungsvorrichtung nach einem der Ansprüche 2 oder 3, **dadurch gekennzeichnet, dass** wenigstens eine der Fotodioden (90a, 90b, 90c, 90d) elektrisch in Sperrrichtung vorgespannt (V₀) ist.

5. Beleuchtungsvorrichtung nach einem der vorangehenden Ansprüche, **dadurch gekennzeichnet, dass** sie des Weiteren eine Verkleinerungs-Optik (82) umfasst, mit der der linienförmige Strahl (70a) in der zweiten Richtung (y) verkleinert wird.

6. Beleuchtungsvorrichtung nach einem der vorangehenden Ansprüche, **dadurch gekennzeichnet, dass** sie des Weiteren eine Abbildungs-Optik (82) umfasst, mit der der linienförmige Strahl (70a) auf der Probe (66) abgebildet wird.

7. Beleuchtungsvorrichtung nach einem der vorangehenden Ansprüche, **dadurch gekennzeichnet, dass** die Strahlformungs-Optik (80) einen Homogenisierer (40) umfasst, mit dem der Laserstrahl (12) wenigstens entlang seiner Abmessung in der ersten Richtung (x) homogenisiert wird.

8. Beleuchtungsvorrichtung nach einem der vorangehenden Ansprüche, **dadurch gekennzeichnet, dass** die Strahlformungs-Optik (80) eine Feldbegrenzungs-Optikvorrichtung (54) umfasst, mit der die Abmessung des Laserstrahls (12) wenigstens in der zweiten Richtung (y) begrenzt wird.

## Revendications

1. Appareil d'éclairage pour éclairer un échantillon (66) sur une plate-forme de travail (68) avec une ligne d'éclairage étroite (870) d'énergie contrôlée, ledit appareil d'éclairage comprenant une source laser (10), ladite ligne d'éclairage (70) étant générée à partir d'un faisceau laser (12) qui se propage le long d'un chemin de faisceau (13) et émis par ladite source laser (10), et ayant une dimension dans une première direction (x) supérieure à un multiple de fois une dimension dans une deuxième direction (y) perpendiculaire à ladite première direction (x), comprenant :
un système optique de formation de faisceau (80) pour former ledit faisceau laser (12) en une forme linéaire (70a),
un dispositif de mesure d'énergie (58) pour mesurer l'énergie dudit faisceau laser (12),
un système de contrôle d'énergie (76) pour générer un signal de contrôle (78) en fonction de ladite énergie mesurée du faisceau laser et pour contrôler l'émission d'énergie de ladite source laser (10) en fonction dudit signal de contrôle (78),
**caractérisé en ce que**
ledit dispositif de mesure d'énergie (58) est agencé dans ledit chemin de faisceau (13) après ledit système optique de formation de faisceau (80) et avant ladite plate-forme de travail (68) ;
ledit dispositif de mesure d'énergie (58) comprend un diviseur de faisceau (84) pour découpler une fraction (70b) dudit faisceau de forme linéaire (70a) et un détecteur (86) comprenant une pluralité de lentilles (88a, 88b, 88c, 88d) pour focaliser ladite fraction (70b) dudit faisceau de forme linéaire (70a) sur une pluralité de capteurs (90a, 90b, 90c, 90d) ;
ladite pluralité de capteurs (90a, 90b, 90c, 90d) étant adaptée pour sortir une pluralité de signaux (Iₚₕₐ, I_{phb}, I_{phc}, I_{phd}), le système de contrôle d'énergie étant adapté pour intégrer ladite pluralité de signaux (Iₚₕₐ, I_{phb}, I_{phc}, I_{phd}) afin de générer ledit signal de contrôle (78) ;
ledit signal de contrôle (78) étant indicatif d'une énergie de faisceau moyenne le long de la dimension dudit faisceau de forme linéaire (70a) dans ladite première direction (x).

2. Appareil d'éclairage selon la revendication 1, **caractérisé en ce que** lesdits capteurs comprennent une pluralité de photodiodes (90a, 90b, 90c, 90d) qui sont agencées côte à côte dans ladite première direction (x) pour collecter ladite fraction (70b).

3. Appareil d'éclairage selon la revendication 2, **caractérisé en ce que** lesdites lentilles (88a, 88b, 88c, 88d) sont des lentilles sphériques.

4. Appareil d'éclairage selon l'une des revendications 2 ou 3, **caractérisé en ce qu'**au moins l'une desdites photodiodes (90a, 90b, 90c, 90d) est polarisée électriquement en sens inverse (V₀).

5. Appareil d'éclairage selon l'une des revendications précédentes, **caractérisé en ce qu'**il comprend en outre un dispositif optique de réduction (82) pour réduire ledit faisceau de forme linéaire (70a) dans ladite deuxième direction (y).

6. Appareil d'éclairage selon l'une des revendications précédentes, **caractérisé en ce qu'**il comprend en outre un dispositif optique d'imagerie (82) pour imager ledit faisceau de forme linéaire (70a) sur ledit échantillon (66).

7. Appareil d'éclairage selon l'une des revendications précédentes, **caractérisé en ce que** ledit système optique de formation de faisceau (80) comprend un homogénéisateur (40) pour homogénéiser ledit faisceau laser (12) au moins le long de sa dimension dans ladite première direction (x).

8. Appareil d'éclairage selon l'une des revendications précédentes, **caractérisé en ce que** ledit système optique de formation de faisceau (80) comprend un dispositif optique de définition de champ (54) pour définir la dimension dudit faisceau laser (12) au moins dans ladite deuxième direction (y).
